Europäisches Patentamt

European Patent Office

Office européen des brevets

(19)

(11) Veröffentlichungsnummer: **0 477 599 A2**

## (12) EUROPÄISCHE PATENTANMELDUNG

(21) Anmeldenummer: **91114775.9**

(22) Anmeldetag: **02.09.91**

(51) Int. Cl.5: **G06F 9/28**, G06F 9/26

(30) Priorität: **26.09.90 DE 4030436**

(43) Veröffentlichungstag der Anmeldung:
**01.04.92 Patentblatt 92/14**

(84) Benannte Vertragsstaaten:
**AT DE ES FR GB IT NL**

(71) Anmelder: **SIEMENS AKTIENGESELLSCHAFT**
**Wittelsbacherplatz 2**
**W-8000 München 2(DE)**

(72) Erfinder: **Wahr, Alfons-Josef**
**Pucher Strasse 52**
**W-8080 Fürstenfeldbruck(DE)**

(54) **Steuerspeicher für einen n Prozessorelemente aufweisenden Prozessor.**

(57) Die Mikroprogramme zur Ausführung der Befehle durch die Prozessorelemente (PE) sind im Steuerspeicher (CS) enthalten, der so ausgeführt ist, daß zumindest bei häufig verwendeten Mikroprogrammen ein gleichzeitiger Zugriff der Prozessorelemente (PE) zum Steuerspeicher (CS) möglich ist. Dazu weist der Steuerspeicher (CS) einen ersten Teilspeicher (CS1) auf, der eine der Anzahl der Prozessorelemente entsprechende Anzahl von Leseports (CP) aufweist, wobei jeweils ein Leseport einem Prozessorelement zugeordnet ist. Weiterhin weist der Steuerspeicher einen zweiten Teilspeicher (CS2) auf, der mindestens einen Leseport (C2P) hat, auf den alle Prozessorelemente zugreifen können. Mit Hilfe einer Portsteuerung (PST) kann z.B. in Abhängigkeit der Adresse des angeforderten Mikroprogrammes entweder ein Port (CP) des ersten Teilspeichers (CS1) oder der Port (C2P) des zweiten Teilspeichers (CS2) zum zum Prozessorelement (PE) führenden Mikrobefehlsbus (MI) durchgeschaltet werden. Da die häufig verwendeten Mikroprogramme im ersten Teilspeicher, die weniger häufig verwendeten Mikroprogramme im zweiten Teilspeicher stehen, ist auch bei parallelen Betrieb nur selten ein Zugriffskonflikt gegeben.

FIG 2

Für die Firmware von mikroprogarmmierten Prozessoren benötigt man einen Mikroprogrammspeicher, der auch Steuerspeicher oder Control Storage genannt wird. Aus dem Steuerspeicher wird normalweise nur ausgelesen, er kann somit als ROM implementiert sein. Für die Rechnerentwicklung, zum leichteren Anpassen eines Systems und für notwendige Änderungen der Firmware kann es ggf. sinnvoll sein, den Steuerspeicher beschreibbar zu realisieren.

Es ist bekannt, den Steuerspeicher für einen Prozessor zu unterteilen, wobei ein Teil des Steuerspeichers zusammen mit dem Prozessor auf dem Chip implementiert sein kann, während der zweite Teil außerhalb des Chips realisiert wird. Dies ist dann zweckmäßig, wenn es nicht möglich ist, den gesamten Steuerspeicher zuammen mit dem Prozessor auf dem Chip zu integrieren.

Die der Erfindung zugrunde liegende Aufgabe besteht darin, einen Steuerspeicher anzugeben, der besonders geeignet ist zur Bereitstellung von Mikroprogrammen für n Prozessorelemente eines Prozessors. Die Prozessorelemente können z.B. CPU's sein.

Diese Aufgabe wird gemäß den Merkmalen des Patentanspruchs 1 gelöst. Damit wird der Steuerspeicher mit Hilfe von zwei Teilspeichern, dem ersten Teilspeicher und dem zweiten Teilspeicher realisiert. Der erste, meist kleinere Teilspeicher enthält n physikalische Ports, jeweils für jedes Prozessorelement einen. Im ersten Teilspeicher werden die am häufigsten benutzten Mikroprogrammteile eingespeichert. Der zweite Teilspeicher enthält in der Regel nur einen physikalischen Port, auf den alle Prozessorelemente zugreifen können. Mit Hilfe eines Steuerspeicher-Multiplexers kann erreicht werden, daß alle Prozessorelemente auf den Eingangsport des zweiten Teilspeichers zugreifen können. Dieser zweite Teilspeicher kann für weniger benutzte Mikroprogrammteile verwendet werden.

Zur Steuerung des Zugriffs der Prozessorelemente zum ersten Teilspeicher oder zum zweiten Teilspeicher kann eine Portsteuerung verwendet werden, die pro Prozessorelement eine Portsteuereinheit aufweist, wobei jedes Prozessorelement über einen Mikrobefehlsbus mit einer zugeordneten Portsteuereinheit verbunden ist. Zum Beispiel aus der Adresse des Mikroprogramms kann die Portsteuereinheit entscheiden, ob der Zugriff auf den ersten Teilspeicher oder den zweiten Teilspeicher erfolgen soll. Dementsprechend werden dann Auswahlsignale erzeugt, die den Übertragungsweg der Daten, also der Mikroprogrammteile, von den Teilspeichern zu den Prozessorelementen auswählt. Dazu können in die Mikrobefehlsbusse Datenmultiplexer geschaltet sein, die den Mikrobefehlsbus entweder zu einem zugeordneten Port des ersten Teilspeichers oder zu dem Steuerspeichermultiplexer des zweiten Teilspeichers schaltet.

Andere Weiterbildungen der Erfindung ergeben sich aus den Unteransprüchen.

Anhand eines Ausführungsbeispieles, das in den Figuren dargestellt ist, wird die Erfindung weiter erläutert. Es zeigen

Figur 1 ein Prinzipschaltbild der Architektur eines Prozessors mit vier Prozessorelementen,
Figur 2 die Realisierung des Steuerspeichers,
Figur 3 den Aufbau der Portsteuereinheit.

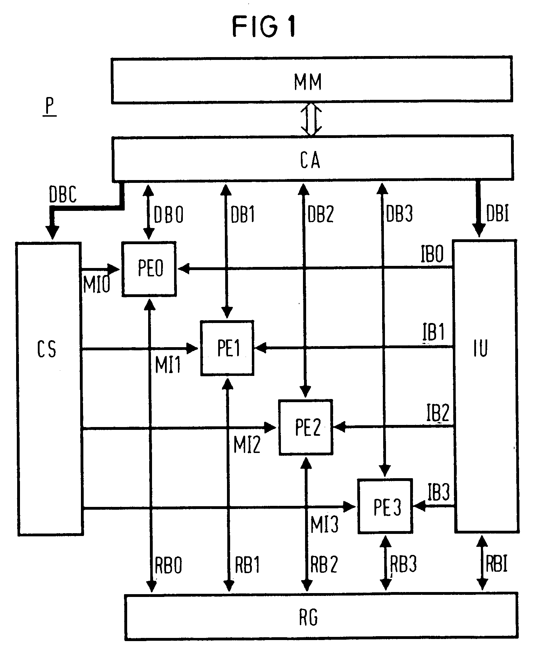

Nach der Figur 1 weist ein Prozessor P n Prozessorelemente (n ganze Zahl) z.B. 4 Prozessorelemente PE0 bis PE3, ein Befehlswerk IU, eine Cachespeichereinrichtung CA, einen Hauptspeicher MM, eine Registerbank RG und einen Steuerspeicher CS auf. Die Prozessorelemente PE, die als Central Processing Unit ausgeführt sein können, sind über Datenbusse DB mit der Cachespeichereinrichtung CA, über Befehlsbusse IB mit dem Befehlswerk und über Mikrobefehlsbusse MI mit dem Steuerspeicher CS und über Registerbusse RB mit der Registerbank RG verbunden. Das Befehlswerk kann über einen Bus DBI mit der Cachespeichereinrichtung CA, über einen Registerbus RBI mit der Registerbank RG verbunden sein. Wenn der Steuerspeicher CS änderbar sein soll, kann ein Bus DBC von der Cachespeichereinrichtung CA zum Steuerspeicher CS führen. Die Cachespeichereinrichtung CA ist auf übliche Weise mit dem Hauptspeicher verbunden.

Zum Betrieb der Prozessorelemente PE sind Mikroprogramme erforderlich, die im Steuerspeicher CS stehen. Diese Mikroprogramme bilden die sog. Firmware. Jedes Prozessorelement PE muß, wenn es einen Befehl eines Programmes ausführen muß, den sie vom Befehlswerk IU erhalten hat, das zugeordnete Mikroprogramm im Steuerspeicher CS ansteuern und über den Mikrobefehlsbus MI lesen. Da in Figur 1 vier Prozessorelemente PE0 bis PE3, im allgemeinen Fall n Prozessorelemente, auf den Steuerspeicher CS zugreifen und die Prozessorelemente PE parallel arbeiten sollen, muß dafür gesorgt werden, daß beim Steuerspeicher CS keine Zugriffsprobleme entstehen.

Im folgenden wird nur auf den Betrieb des Steuerspeichers CS eingegangen, das Zusammenwirken der übrigen Einheiten des Prozessors P z.B.zwischen den Prozessorelementen und dem Befehlswerk, dem Cachespeicher usw. werden als bekannt vorausgesetzt.

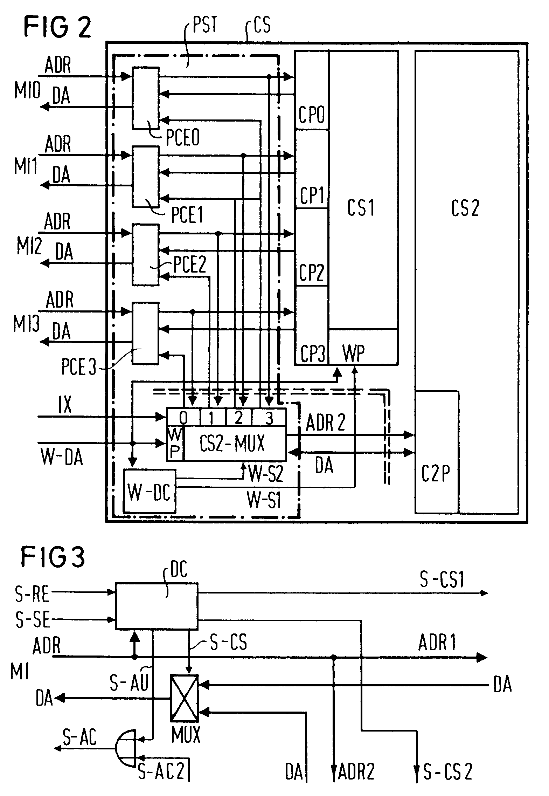

Die Realisierung des Steuerspeichers CS mit dem Ziel, den Zugriff von mehreren Prozessorelementen PE zu dem Steuerspeicher CS möglichst ohne Konflikte zu ermöglichen, zeigt Figur 2. Der Steuerspeicher CS enthält einen ersten Teilspeicher CS1 und einen zweiten Teilspeicher CS2. Der erste Teilspeicher CS1 weist eine Anzahl von Ports CP auf, die in der Anzahl mit den Prozessorelementen PE übereinstimmen. Einem Prozessor mit n Prozessorelementen sind somit n Ports CP zugeordnet. Jeweils ein Port CP ist einem Prozessorelement PE zugeordnet. Die diesem Prozessorelement PE zugeordneten Mikroprogramme werden über diesen Port CP ausgelesen und über den Mikrobefehlsbus MI zum Prozessorelement PE übertragen. Zum Beispiel kann der Port CP0 dem Prozessorelement PE0 zugeordnet werden und demgemäß werden die im ersten Teilspeicher CS1 erhaltenen Mikroprogramme für das Prozessorelement PE0 über den Port CP0 und den Mikrobefehlsbus MI0 zum Prozessorelement PE0 übertragen.

Der zweite Teilspeicher CS2 enthält ebenfalls Mikroprogramme, er unterscheidet sich aber vom ersten Teilspeicher CS1 dadurch, daß er nur wenige Ports, im Ausführungsbeispiel nur einen einzigen Port C2P aufweist. Da auch hier die Möglichkeit besteht, daß mehrere Prozessorelemente gleichzeitig auf den zweiten Teilspeicher CS2 zugreifen wollen, muß dafür gesorgt werden, daß dieser Zugriff nur einer bestimmten Reihenfolge erfolgen kann, wie dies weiter unten erläutert ist.

Der erste Teilspeicher CS1 kann kleiner ausgeführt sein als der zweite Teilspeicher CS2. Im ersten Teilspeicher CS1 können die häufiger von den Prozessorelementen verwendeten Mikroprogramme stehen, während im zweiten Teilspeicher CS2 die seltener benutzten Mikroprogramme enthalten sein können.

Die Verbindung der Mikrobefehlsbusse MI zwischen den Prozessorelementen PE und den Teilspeichern CS1 und CS2 wird über eine Portsteuerung PST ermöglicht. Zunächst enthält diese Portsteuerung PST Portsteuereinheiten PCE, jeweils eine pro Port CP des ersten Teilspeichers CS1. Auf diese Portsteuereinheit PCE führt der Mikrobefehlsbus MI, über den sowohl Adressen ADR als auch Daten DA übertragen werden. Die Adressen ADR geben an, wo im ersten oder zweiten Teilspeicher das auszulesende Mikroprogramm steht und daraufhin werden diese Mikroprogramme als Daten DA über den Mikrobefehlsbus zum Prozessorelement übertragen. Der Adreßteil des Mikrobefehlsbusses MI führt somit zu der Portsteuereinheit PCE und von dort sowohl zum ersten Teilspeicher als auch zum zweiten Teilspeicher. Der Datenteil des Mikrobefehlsbusses MI ist entweder über die Portsteuereinheit PCE mit einem Port CP des ersten Teilspeichers oder mit dem Port C2P des zweiten Teilspeichers CS2 verbindbar. Ob der Port CP oder der Port C2P mit dem Mikrobefehlsbus verbunden ist, wird mit Hilfe der Port-Steuereinheit PCE festgelegt, die entweder den einen oder den anderen auf den Mikrobefehlsbus MI durchschaltet. Wie aus Figur 2 entnehmbar ist, greifen alle Prozessorelemente über ihre Mikrobefehlsbusse auf den Port C2P des zweiten Teilspeichers CS2 zu. Da nur ein Prozessorelement zugreifen kann, ist als weiterer Teil der Portsteuerung PST ein Steuerspeichermultiplexer CS2-MUX vorgesehen, der eine der Anzahl der Prozessorelemente entsprechende Anzahl von Ein- und Ausgängen aufweist, dagegen nur einen einzigen Ausgang oder Eingang, der zum Port C2P des zweiten Teilspeichers CS2 führt. Mit Hilfe des Multiplexers CS2-MUX ist es somit möglich, sowohl den Adreßteil als auch den Datenteil jedes Mikrobefehlsbusses MI zum Port C2P des zweiten Teilspeichers CS2 durchzuschalten.

Ein Aufbau der Portsteuereinheit PCE ist in Figur 3 dargestellt. Sie weist einen Decoder DC auf, die z.B. anhand der Adresse ADR feststellt, ob der erste Teilspeicher CS1 oder der zweite Teilspeicher CS2 zu adressieren ist. Dementsprechend erzeugt die Decoderschaltung DC ein Auswahlsignal S-CS und führt dies den Teilspeichern CS1 und CS2 zu. Die Portsteuereinheit weist weiterhin einen Datenmultiplexer MUX auf, der in Abhängigkeit des Auswahlsignales S-SC entweder den zugeordneten Port CP des ersten Teilspeichers oder dem Port C2P des zweiten Teilspeichers zum Mikrobefehlsbus MI durchschaltet.

Wenn ein Prozessorelement PE in Abhängigkeit eines ausführenden Befehles ein Mikroprogramm benötigt, dann gibt das Prozessorelement PE ein Requestsignal S-RE ab, das dem Decoder DC zugeführt wird. Wenn die Anforderung ausführbar ist, dann gibt der Decoder DC ein Quittungssignal S-AC1 ab, das dem Prozessorelement PE zugeführt wird. In Abhängigkeit der Adresse ADR entscheidet der Decoder DC, ob das Mikrogamm aus dem ersten Teilspeicher oder aus dem zweiten Teilspeicher zu lesen ist. Ein erster Adreßteil ADR1 der Adresse wird dem ersten Teilspeicher CS1, ein zweiter Adreßteil ADR2 dem zweiten Teilspeicher zugeführt. Entsprechend dem Auswahlsignal S-CS1 und S-CS2 wird dann das Mikroprogramm entweder dem ersten Teilspeicher oder dem zweiten Teilspeicher entnommen.

Es ist auch möglich, das Auswahlsignal S-CS mit Hilfe eines vom Prozessorelement gelieferten Signales S-SE zu erzeugen. Wird die Adresse ADR zu Hilfe genommen, dann könnte ein bestimmtes Adreßbit der Adresse zur Erzeugung des Auswahlsignales verwendet werden oder es könnte durch UND/ODER-Verknüpfung des Adreßteiles ADR1 bzw. ADR2 festgestellt werden, welcher Teilspeicher adressiert wird.

Da mehrere Prozessorelemente PE gleichzeitig auf den zweiten Teilspeicher zugreifen können, kann mit Hilfe des Multiplexers CS2-MUX festgelegt werden, welches Prozessorelement zuerst zugreifen darf. Diese Priorität zur Auswahl könnte fest vorgegeben sein, könnte aber auch mit einem Signal IX, das z.B. vom Befehlswerk kommt, festgelegt werden.

Bisher ist nur erläutert worden, wie Mikroprogramme aus den Teilspeichern gelesen werden können. Wenn die Teilspeicher beschreibbar ausgeführt sind, können z.B. vom Cachespeicher neue Mikroprogramme über den Bus DBC in den Steuerspeicher CS eingeschrieben werden. Dazu ist es zweckmäßig, daß der erste Teilspeicher CS1 einen besonderen Schreibport WP aufweist, über den die einzuschreibenden Mikroprogramme in den Teilspeicher CS1 eingeschrieben werden. Entsprechend können die in den Teilspeicher CS2 einzuschreibenden Mikroprogramme über den Multiplexer CS2-MUX zum Port C2P durchgeschaltet werden, der in diesem Falle bidirektional ausgestaltet sein könnte. Mit Hilfe eines Schreibsignales W-S könnte der erste und zweite Teilspeicher zum Beschreiben ausgewählt werden. Das Schreibauswahlsignal W-S wird mit Hilfe eines Schreibdecoders W-DC aus der Schreibdatenadresse von W-DA entnommen.

Der erste Teilspeicher CS1, in dem zweckmäßigerweise die am häufigsten verwendeten Mikroprogramme stehen, kann zusammen mit den Prozessorelementen PE auf einem Chip integriert sein. Dazu wäre dann auch die Portsteuerung PST mit integriert. Der zweite Teilspeicher CS2 könnte dagegen auf einem oder mehreren anderen Chip(s) integriert sein, da dort die weniger häufig benutzten Mikroprogramme enthalten sind und dieser Teilspeicher auch sehr viel größer ausgeführt sein könnte. Die Schnittstelle würde dann an den in Figur 2 gestrichelten Linien liegen.

Die Ausführung des ersten Teilspeichers CS1 könnte aber auch so sein, daß pro Prozessorelement PE ein besonderer Speicher RAM vorgesehen ist, so daß n parallele RAM's den ersten Teilspeicher CS1 bilden. Dieser RAM könnte dann zusammen mit dem zugeordneten Prozessorelement PE auf einem Chip integriert sein. Der erste Teilspeicher CS1 wäre dann nicht als Multiport RAM ausgeführt, sondern würde pro Prozessorelement einen getrennten RAM vorsehen. Der zweite Teilspeicher CS2 könnte dann wiederum auf einem getrennten Chip liegen.

Die Abarbeitung eines Programmteils durch ein Prozessorelement PE z.B. durch das Prozessorelement PE0, würde dazuführen, daß das Prozessorelement PE0 die zur Bearbeitung der Befehle notwendigen Mikroprogramme aus dem Steuerspeicher CS anfordert. Dazu gibt das Prozessorelement PE0 eine Anforderung S-RE an die Portsteuereinheit PCE0 an und legt die Adresse ADR an die Portsteuereinheit PCE0 an. Der Decoder DC ermittelt aus der Adresse ADR, welcher Teilspeicher adressiert wird. Stellt er fest, daß der Teilspeicher CS1 adressiert wird, erzeugt er das Auswahlsignal S-CS1 zum Port CP0 und gibt ein Quittungssignal S-AC1 ab, das zum Prozessorelement PE0 übertragen wird. Weiterhin stellt der Decoder DC den Datenmultiplexer MUX so ein, daß die Daten DA vom Port CP0 zum Prozessorelement PE0 übertragen werden können. Die Adresse des Mikroprogramms im ersten Teilspeicher CS1 kann dem Adreßteil ADR1 entnommen werden.

Sollte der Decoder DC feststellen, daß das adressierte Mikroprogramm im zweiten Teilspeicher CS2 steht, gibt er das Auswahlsignal S-CS2 ab und schaltet den Datenmultiplexer MUX so, daß der Port C2P des zweiten Teilspeichers CS2 mit dem Mikrobefehlsbus MI0 verbunden ist. Das Auswahlsignal S-CS2 wird dem Multiplexer CS2-MUX zugeführt, der feststellt, ob ein Zugriff zum Port C2P möglich ist oder ob ein höherer priorer Zugriff vorliegt. Wenn der Zugriff für das Prozessorelement PE0 erlaubt ist, gibt der Multiplexer CS2-MUX das Quittungssignal S-AC2 ab, das wiederum zum Prozessorelement PE0 übertragen wird. Der Multiplexer CS2-MUX wird so eingestellt, daß die Adresse ADR2 vom Prozessorelement PE0 zum Port C2P und die darauf gelesenen Daten DA über den Datenmultiplexer MUX zum Mikrobefehlsbus MI0 übertragen werden.

**Patentansprüche**

1. Steuerspeicher für einen n Prozessorelemente (PE) aufweisenden Prozessor (P) mit
   - einem ersten Teilspeicher (CS1), der eine der Anzahl der Prozessorelemente (PE) entsprechende Anzahl von Leseports (CP) aufweist, wobei jeweils ein Leseport einem Prozessorelement zugeordnet ist,
   - einem zweiten Teilspeicher (CS2), der mindestens einen Leseport (C2P) aufweist, auf den alle Prozessorelemente zugreifen können,
   - einer Portsteuerung (PST), die die zu den Prozessorelementen führenden Mikrobefehlsbusse (MI) entweder zum ersten Teilspeicher (CS1) oder zum zweiten Teilspeicher (CS2) schaltet.

2. Steuerspeicher nach Anspruch 1,
   dadurch **gekennzeichnet,**
   daß im ersten Teilspeicher (CS1) die häufig verwendeten Mikroprogramme stehen, im zweiten Teilspeicher (CS2) die selten verwendeten Mikroprogramme.

3. Steuerspeicher nach Anspruch 1 oder 2 mit einer Portsteuerung (PST) mit
   - einer Portsteuereinheit (PCE) pro Port (CP) des ersten Teilspeichers (CS1), die bei Anforderung eines Mikroprogrammes durch das zugeordnete Prozessorelement entweder den ersten Teilspeicher (CS1) oder den zweiten Teilspeicher (CS2) auswählt und ein entsprechendes Auswahlsignal (S-CS1, S-CS2) erzeugt und dementsprechend den zum Prozessorelement führenden Mikrobefehlsbus (MI) entweder mit dem ersten Teilspeicher oder dem zweiten Teilspeicher verbindet,
- einem Steuerspeicher-Multiplexer (CS2-MUX), dessen Ausgang mit dem Port (C2P) des zweiten Teilspeichers (CS2) verbunden ist und der die Mikrobefehlsbusse (MI) zu den Prozessorelementen zum Port (C2P) des zweiten Teilspeichers durchschaltet.

4. Steuerspeicher nach Anspruch 3 mit der Portsteuereinheit (PCE) mit
- einem Decoder (DC), der das Auswahlsignal (S-CS1, S-CS2) erzeugt,
- einem Datenmultiplexer (MUX), der in Abhängigkeit des Auswahlsignales (S-SC) entweder den Leseport (CP) des ersten Teilspeichers (CS1) oder über den Steuerspeichermultiplexer (CS2-MUX) den Port (C2P) zum Mikrobefehlsbus durchschaltet.

5. Steuerspeicher nach Anspruch 4,
dadurch **gekennzeichnet,**
daß der Decoder (DC) aus der Adresse (ADR) das Auswahlsignal (S-CS) erzeugt.

6. Steuerspeicher nach einem der Ansprüche 3 bis 5,
dadurch **gekennzeichnet,**
daß der Steuerspeichermultiplexer (CS2-MUX) den Mikrobefehlsbus des höchst prioren Prozessorelementes zum zweiten Teilspeicher (CS2) durchschaltet, wenn Anforderungen von mehreren Prozessorelementen zum zweiten Teilspeicher führen.

7. Steuerspeicher nach einem der vorhergehenden Ansprüche,
dadurch **gekennzeichnet,**
daß zum Beschreiben der Teilspeicher (CS1, CS2) ein Schreibport (WP, C2P) vorgesehen ist.

8. Steuerspeicher nach einem der vorhergehenden Ansprüche,
dadurch **gekennzeichnet,**
daß die Portsteuerung (PST) und der erste Teilspeicher (CS1) als Multiportspeicher auf einem Chip angeordnet ist, der zweite Teilspeicher (CS2) auf einem anderen.

9. Steuerspeicher nach einem der Ansprüche 1 bis 8,
dadurch **gekennzeichnet,**
daß als erste Teilspeicher (CS1) getrennte RAM-Speicher vorgesehen sind, die jeweils mit der zugeordneten Portsteuereinheit (PCE) auf einem Chip zusammen mit dem Prozessorelement (PE) integriert sind.

# FIG 1

# FIG 2

# FIG 3